# EUROPEAN PATENT APPLICATION

(11) **EP 4 075 552 A1**
(43) Date of publication of application: **19.10.2022**
(21) Application number: 21764482.2
(22) Date of filing: 04.03.2021
(51) Int. Cl.: H01M 8/00, H01M 8/04, H01M 8/04007, H01M 8/04029, H01M 8/0656, H01M 8/10

(54) **HYDROGEN POWER GENERATION SYSTEM**

(30) Priority: 06.03.2020 JP 2020039399; 22.02.2021 JP 2021026786
(71) Applicant: Nippon Filcon Co., Ltd., Inagi-City Tokyo 206-8577 (JP)
(72) Inventor: ENDOU Shinsuke, Inagi-City, Tokyo 206-8577 (JP); NOMURA Kunio, Inagi-City, Tokyo 206-8577 (JP); ITOH Senri, Inagi-City, Tokyo 206-8577 (JP); KAMIGAKI Kenji, Inagi-City, Tokyo 206-8577 (JP); TAGUCHI Megumi, Inagi-City, Tokyo 206-8577 (JP); KANDA Miho, Inagi-City, Tokyo 206-8577 (JP); MAENAKA Yoshinari, Inagi-City, Tokyo 206-8577 (JP); KOMIYA Yukio, Inagi-City, Tokyo 206-8577 (JP)
(74) Representative: Schäfer, Matthias W.
(86) International application number: PCT/JP2021/008393
(87) International publication number: WO 2021/177398

(57) **Abstract**

[Problem] To provide a hydrogen power generation system which efficiently enables the achievement of hydrogen storage and power generation with use of hydrogen.

[Solution] This hydrogen power generation system 1 is provided with: a water decomposition stack 2 which generates hydrogen through a reaction of water; a fuel cell 4 which performs power generation with use of hydrogen; and an MH unit 3 which is connected to the water decomposition stack 2 or the fuel cell 4 in a detachable manner, and stores hydrogen generated by the water decomposition stack 2, while being capable of supplying the hydrogen to the fuel cell 4.

## Description

### TECHNICAL FIELD

The present invention relates to a hydrogen power generation system.

### BACKGROUND ART

A self-standing type hydrogen power generation system that supplies power without requiring a commercial power supply at the time of disaster such as an earthquake is conventionally known.

As such a hydrogen power generation system, patent document 1 discloses a hydrogen power generation system in which a hydrogen generation device (b) including a hydrogen manufacturing device 3 and a drinking water supply device (a) including a hydrogen absorbing alloy 7 that stores hydrogen manufactured by the hydrogen manufacturing device 3 and a fuel cell 8 that generates power using the hydrogen discharged from the hydrogen absorbing alloy 7 are integrally coupled. The reference numerals are as described in patent document 1.

### PRIOR ART REFERENCES

### PATENT DOCUMENTS

[Patent document 1] Japanese Unexamined Patent Publication No. 2017-103198

### DISCLOSURE OF THE INVENTION

### PROBLEMS TO BE SOLVED BY THE INVENTION

However, the configuration described above has a problem in that storage of hydrogen manufactured by the hydrogen manufacturing device 3 and power generation by the fuel cell 8 cannot be performed simultaneously since the hydrogen absorbing alloy 7 is always connected to the hydrogen manufacturing device 3 and the fuel cell 8.

Thus, a technical problem to be solved to provide a hydrogen power generation system capable of efficiently performing storage of hydrogen and generation of power using hydrogen arises, and the present invention aims to solve such a problem.

### MEANS FOR SOLVING THE PROBLEMS

To achieve the above aim, a hydrogen power generation system according to the present invention relates to a hydrogen power generation system including a hydrogen generation device that generates hydrogen by reacting water; a power generation device that generates power using the hydrogen; and a cartridge type hydrogen storage device that is detachably connected to the hydrogen generation device or the power generation device, stores hydrogen generated by the hydrogen generation device, and is capable of supplying hydrogen to the power generation device.

According to such a configuration, the connection between the cartridge type hydrogen storage device and the hydrogen generation device or the power generation device can be appropriately detached, and storage of hydrogen and power generation using hydrogen can be efficiently performed.

Furthermore, in the hydrogen power generation system according to the present invention, the cartridge type hydrogen storage device preferably includes a tank that stores the hydrogen, a jacket made of metal in contact with the tank, and a casing that accommodates the jacket.

In the hydrogen power generation system according to the present invention, the jacket is preferably formed to a substantially cylindrical shape so as to come into contact with an outer periphery and a bottom surface of the tank.

Furthermore, in the hydrogen power generation system according to the present invention, the cartridge type hydrogen storage device further preferably includes a temperature control block that is joined to the jacket to temperature control the jacket.

In addition, the hydrogen power generation system according to the present invention further preferably includes a cooling device that cools the jacket by supplying cold water to a cold water path formed in the temperature control block.

Moreover, in the hydrogen power generation system according to the present invention, the cartridge type hydrogen storage device further preferably includes a heater that is buried in the temperature control block to heat the jacket.

In addition, in the hydrogen power generation system according to the present invention, a hydrogen absorbing alloy is preferably accommodated in the tank.

Furthermore, in the hydrogen power generation system according to the present invention, the hydrogen generation device is preferably a water electrolysis stack that generates hydrogen through electrolysis of water.

Furthermore, in the hydrogen power generation system according to the present invention, the hydrogen generation device further preferably includes a renewable energy power generation device, and a secondary cell that accumulates electricity generated by the renewable energy power generation device.

In addition, in the hydrogen power generation system according to the present invention, the power generation device is a fuel cell, and an exhaust heat recycling mechanism that warms outside air taken into the fuel cell by exhaust heat of the fuel cell is further preferably provided.

Moreover, in the hydrogen power generation system according to the present invention, preferably, a housing accommodating the fuel cell is communicated to a return duct through an exhaust side opening provided on an exhaust side with respect to the fuel cell in a flowing direction of air flowing through the housing and an intake side opening provided on an intake side with respect to the fuel cell; and the exhaust heat recycling mechanism includes a temperature sensor that measures a temperature of outside air taken into the fuel cell, a shutter that can open/close the exhaust side opening for allowing or blocking the inflow of air from the housing to the return duct through the exhaust side opening, a fan that sends the air in the return duct to the housing through the intake side opening, and a controller that opens the shutter and drives the fan to return the air warmed by the exhaust heat of the fuel cell to the outside air when a temperature of the outside air is lower than or equal to a predetermined temperature.

### EFFECT OF THE INVENTION

The present invention can appropriately detach the connection between the cartridge type hydrogen storage device and the hydrogen generation device or the power generation device, and efficiently perform storage of hydrogen and power generation using hydrogen.

### BRIEF DESCRIPTION OF THE DRAWINGS

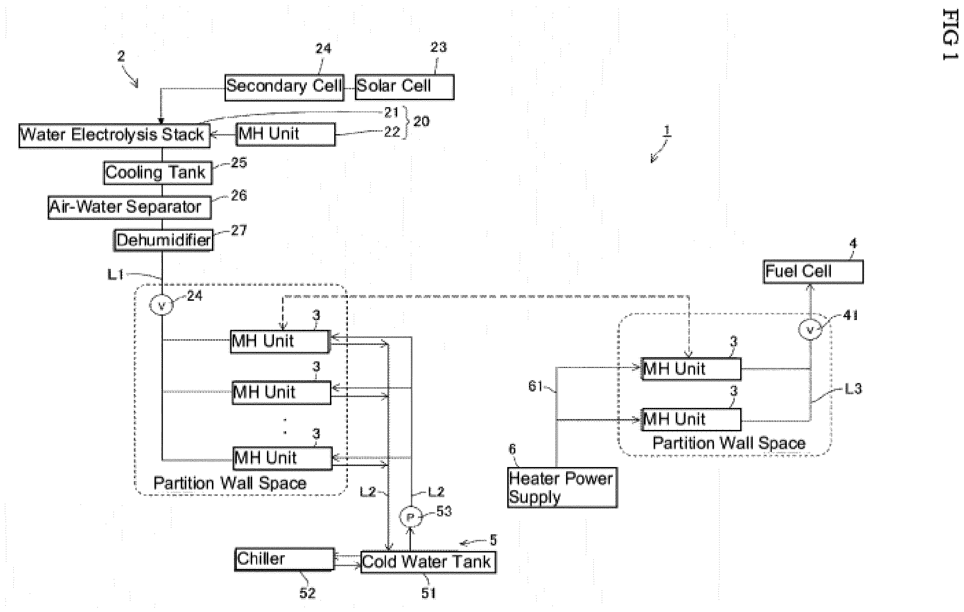

FIG. 1 is a schematic view showing a configuration of a hydrogen power generation system according to one embodiment of the present invention.
FIG. 2 is a schematic view showing a structure of an exhaust heat recycling mechanism.
FIG. 3 is a plan view showing a configuration of an MH unit.
FIG. 4 is a cross-sectional view taken along line A-A in FIG. 3.
FIG. 5 is a cross-sectional view taken along line B-B in FIG. 4.

### BEST MODE FOR CARRYING OUT THE INVENTION

An embodiment of the present invention will be described based on the drawings. Hereinafter, when referring to the number of components, numerical value, amount, range, and the like, they are not limited to a specific number and may be greater than or equal to or less than or equal to a specific number except for when clearly indicated in particular and when clearly limited to a specific number in principle.

Furthermore, when referring to the shape and positional relationship of the components and the like, they include those substantially approximate to or similar to the shapes and the like thereof except for when clearly indicated in particular and when considered otherwise in principle.

In addition, the drawings may be exaggerated to facilitate the understanding of characteristics by enlarging the characteristic portion, and the like, and the dimensional ratio of the components may not necessarily be the same as the actual dimensional ratio. Moreover, in the cross-sectional view, the hatching of some components may be omitted to facilitate the understanding of the cross-sectional structure of the component.

In the present embodiment, the expressions indicating directions such as up, down, left, and right are not absolute and are appropriate when each component is in a posture drawn in the figure but when the posture is changed, they should be interpreted by being changed according to the change in posture.

A hydrogen power generation system 1 according to the present invention efficiently performs generation of hydrogen and power generation from hydrogen. The hydrogen power generation system 1 includes a hydrogen generation device 2, an MH unit 3 serving as a hydrogen storage device, and a fuel cell 4 serving as a power generation device.

The hydrogen generation device 2 includes a water electrolysis stack 21 and a pure water purification device 22. The electrolysis stack 21 reacts the pure water purified by the pure water purification device 22 with a negative pole by flowing electricity through an electrode to generate hydrogen. The decomposed oxygen is discharged into atmosphere. After the hydrogen generation device 2 has generated hydrogen, draining of piping in the water electrolysis stack 21 and the pure water purification device 22 as well as piping connecting the water electrolysis stack 21 and the pure water purification device 22 is automatically carried out, so that water remaining inside the piping can be prevented from freezing.

The water electrolysis stack 21 has a known configuration, and a solid polymer water electrolysis device is preferably used. It is considered to, for example, adopt an electrolysis stack QL-500 (made of Shandong Saikesaisi Hydrogen Energy) for the water electrolysis stack 21. The water electrolysis stack 21 requires power of 400 to 600W by power supply from a solar cell 23 to be described later, where the hydrogen generation amount is 1.0 L/min (0.35 MPa Max).

Furthermore, the water used when the water electrolysis stack 21 generates hydrogen is preferably a purified water, but may be commercially available drinking water or tap water as long as it is water that can generate hydrogen.

The hydrogen generation device 2 preferably includes the solar cell 23 serving as the renewable energy power generation device and a secondary cell 24. Thus, electricity used in the water electrolysis stack 21 can be provided by the electricity generated by the solar cell 23 and accumulated in the secondary cell 24.

The renewable energy power generation device may be any type as long as it is a power generation device that generates electricity based on an energy resource supplemented steadily and iteratively by combining solar light, wind force, wave force, small hydro, flowing water, tide, terrestrial heat, biomass and the like or natural force thereof. It is considered to adopt a solar cell of, for example, CS6P-250P (made of Canadian Solar) for the solar cell 23.

For the secondary cell 24, lead battery or lithium ion battery is preferably used. It is considered to adopt, for example, YT-B24R (made of Optima) for the secondary cell 24.

The hydrogen generated by the water electrolysis stack 21 passes a cooling tank 25, an air-water separator 26, and a dehumidifier 27 in this order. The cooling tank 25 cools the hydrogen, and the air-water separator 26 removes moisture contained in the hydrogen. The moisture can be efficiently removed by the air-water separator 26 by having the cooling tank 25 cool the hydrogen. The dehumidifier 27 dehumidifies the hydrogen by having the hydrogen pass through the silica gel filled inside. The hydrogen whose moisture is removed by passing through the cooling tank 25 and the air-water separator 26 is passed through the dehumidifier 27, and thus the water can be suppressed from building up in the dehumidifier 27. The water thus can be suppressed from accumulating in the MH unit 3, to be described later, in such a manner.

The MH unit 3 is a cartridge type hydrogen storage device capable of storing hydrogen and discharging hydrogen, and is detachably connected to the hydrogen generation device 2 or the fuel cell 4. The configuration of the MH unit 3 will be described later.

A plurality of MH units 3 connected in parallel to the water electrolysis stack 21 by way of a storage hydrogen line L1 respectively stores the hydrogen generated by the water electrolysis stack 21. The plurality of MH units 3 can be simultaneously connected to the water electrolysis stack 21. Furthermore, the plurality of MH units 3 are accommodated in a partition wall space isolated from the outside, and a sensor (not shown) for detecting hydrogen leakage is provided in the space. Reference numeral 24 is an electromagnetic valve of explosion proof specification provided on the storage hydrogen line L1.

The hydrogen power generation system 1 includes a cooling device 5 that cools the MH unit 3 at the time of hydrogen adsorption. The cooling device 5 includes a cold water tank 51 that is connected to the MH unit 3 by way of a cold water line L2 and that stores cold water provided to the MH unit 3, a chiller 52 that cools the cold water in the cold water tank 51, and a pump 53 that sends the cold water from the cold water tank 51 toward the MH unit 3.

The fuel cell 4 is normally installed at a place away from the hydrogen generation device 2. The fuel cell 4 is a power generation device capable of continuously retrieving power by supplying hydrogen to a positive pole (anode), supplying oxygen to a negative pole (cathode), and reacting hydrogen and oxygen at normal temperature or high temperature environment.

A solid polymer type fuel cell that generates power by supplying an oxygen as an oxidizing agent to a positive electrode and a hydrogen as a reducing agent to a negative electrode, with an ion exchange film in between, for example, is known as the fuel cell 4.

The electricity obtained by the fuel cell 4 can be used as electricity supplied to a domestic AC power supply. The electricity supplied by the domestic AC power supply is 100 to 200V. Such a domestic AC power supply may use a power supply for a portable terminal required at the time of disaster or a power supply of household electric appliances such as home television.

A plurality of MH units 3 are connected to the fuel cell 4 by way of a discharge hydrogen line L3. The fuel cell 4 generates power by discharging hydrogen from the MG unit 3 in a state in which the hydrogen is adsorbed. Furthermore, the plurality of MH units 3 are accommodated in a partition wall space isolated from the outside. Reference numeral 41 is an electromagnetic valve of explosion proof specification provided on the discharge hydrogen line L3.

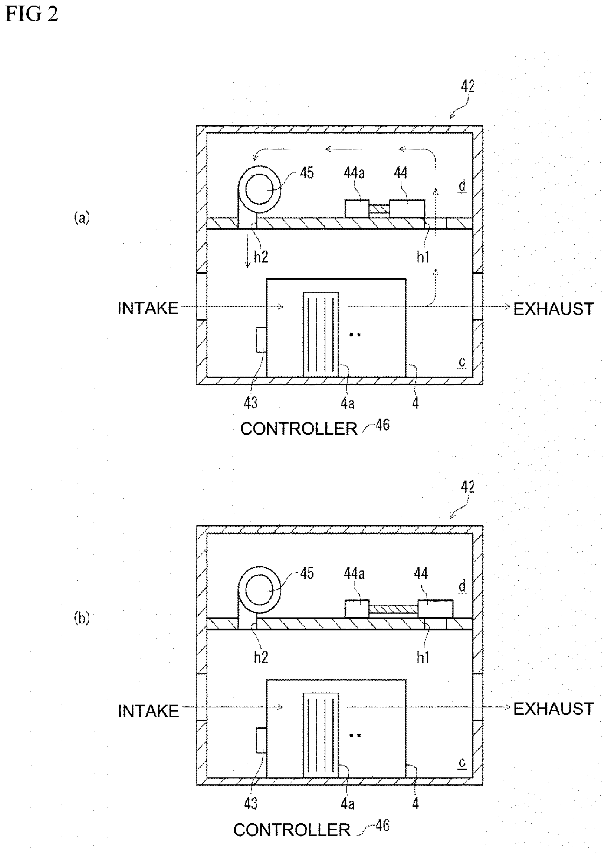

Furthermore, when the fuel cell 4 reacts the oxygen contained in outside air and the hydrogen supplied from the MH unit 3 to generate power, if an intake air temperature of the outside air taken in by a plurality of cells 4a is a low temperature (e.g., lower than or equal to 15°C), flooding that may become the cause of failure of the cell 4a may occur. Thus, as shown in FIGS. 2(a) and 2(b), an exhaust heat recycling mechanism 42 that returns at least a part of the exhaust air at the time of power generation toward the intake side to warm the outside air is preferably provided when the intake air temperature is low. The flooding thus can be suppressed.

The exhaust heat recycling mechanism 42 includes a temperature sensor 43 that measures the temperature (intake air temperature) of the outside air taken into the fuel cell 4, a shutter 44 provided to freely open/close an exhaust side opening h1 that communicates a housing c and a return duct d provided at the upper part of the housing c, a fan 45 that returns the air in the return duct d to the housing c through an intake side opening h2 that communicates the housing c and the return duct d, and a controller 46 that operations controls these components.

The exhaust side opening h1 is provided on the exhaust side with respect to the fuel cell 4 in a flowing direction of air flowing through the housing c, and the intake side opening h2 is provided on the intake side with respect to the fuel cell 4 in the flowing direction of the air flowing through the housing c. Reference numeral 44a refers to a drive motor that moves the shutter 44 forward and backward.

When the outside air temperature measured by the temperature sensor 43 is lower than or equal to a predetermined temperature, as shown in FIG. 2(a), the shutter 44 is opened and the fan 45 is driven, so that the air warmed by the exhaust heat of the fuel cell 4 mixes with the outside air through the exhaust side opening h1, the return duct d and the intake side opening h2 thereby warming the outside air.

On the other hand, when the outside air temperature measured by the temperature sensor 43 is higher than a predetermined temperature, as shown in FIG. 2(b), the shutter 44 is closed and the fan 45 is stopped, so that the air warmed by the exhaust heat of the fuel cell 4 is exhausted to the outside as is.

Thus, flooding can be suppressed easily and conveniently without separately providing a large-scale piping, and the like by warming the outside air with the exhaust heat of the fuel cell 4.

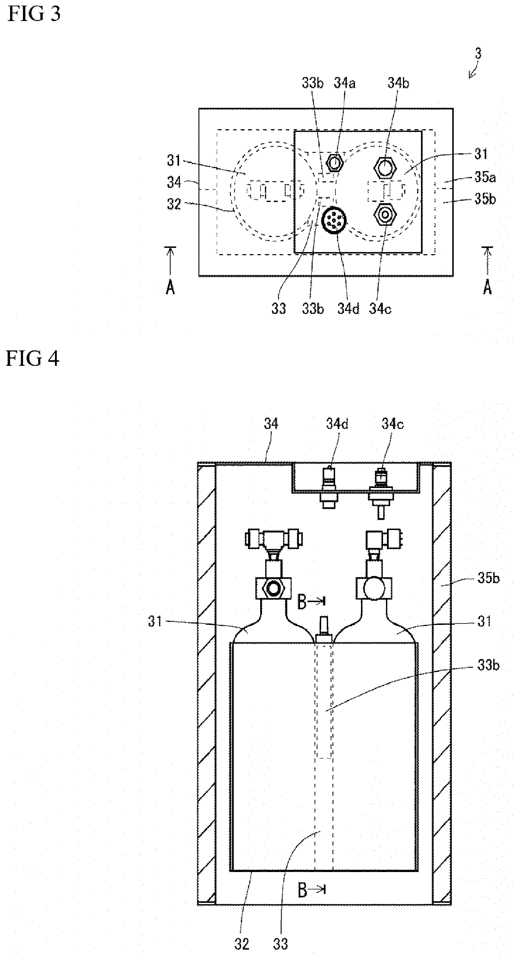

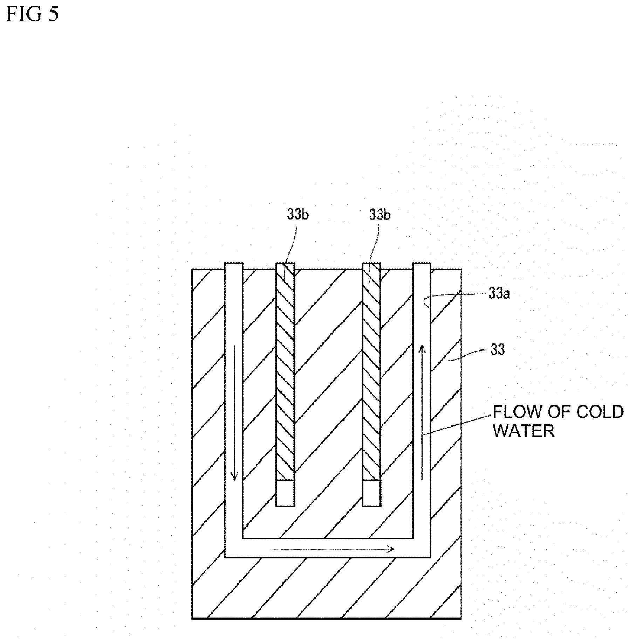

Next, the structure of the MH unit 3 will be described based on FIGS. 3 to 5. The MH unit 3 includes two tanks 31, a jacket 32, a temperature control block 33, and a casing 34.

The tank 31 is a hydrogen adsorbing container accommodating the hydrogen absorbing alloy. The capacity of the tank 31 is, for example, 500 NL. As the hydrogen absorbing alloy, for example, AB2 type, AB5 type, BCC solid solution type, Ti-Fe series, V series, Mg alloy, Pd series, Ca series alloy, and the like are known, but these are not the sole case. The hydrogen storage device may be, for example, organic hydride, liquid hydrogen tank, high-pressure hydrogen tank, and the like other than the MH unit 3 described above, but the hydrogen absorbing alloy is suitable in that the auxiliary accessory is few and the handling is easy.

The jacket 32 is made of metal excelling in thermal conductivity such as copper. The jacket 32 is formed to a substantially cylindrical shape so as to come into contact with the outer periphery and the bottom surface of the tank 31, and accommodates the tank 31. Note that the tank 32 may be in any form as long as it comes into contact with at least a part of the tank 31, and for example, may come into contact with only the outer periphery of the jacket 32.

The temperature control block 33 is disposed between the two tanks 31, and is joined to the jacket 32. The temperature control block 33 preferably uses metal having excellent thermal conductivity, and for example, it is conceivable to use aluminum, iron, stainless steel and the like.

The temperature control block 33 is formed with a cold water path 33a formed to a U-shape when viewed from the side surface.

Furthermore, two cartridge heaters 33b for warming the tank 31 at the time of hydrogen discharge are buried in the temperature control block 33.

The casing 34 is formed to a substantially rectangular parallelepiped shape. A pair of heat insulating materials 35a, 35b divided in half in the perpendicular direction are provided inside the casing 34. The heat insulating materials 35a, 35b are interiorly accommodated so as to sandwich the tank 31. Furthermore, a handle (not illustrated) suitable for transporting the casing 34 is attached to the casing 34.

At the upper lid portion of the casing 34 is provided a hydrogen joint 34a, a cold water input side joint 34b, a cold water output side joint 34c, and a heater power supply joint 34d.

The hydrogen joint 34a is connected to the storage hydrogen line L1 or the discharge hydrogen line L3 and is also connected to two tanks 31 by way of a tube (not illustrated). The connection between the tank 31 and the hydrogen generation device 2 or the fuel cell 4 can be switched by changing the hydrogen line to be connected to the hydrogen joint 34a.

The cold water input side joint 34b is connected to the cold water line L2 to which cold water is supplied from the cold water tank 51, and connects the inlet end of the cold water path 33a through a tube (not illustrated).

The cold water output side joint 34c is connected to an outlet end of the cold water path 33a through a tube (not illustrated), and is connected to the cold water line L2 that refluxes the cold water to the cold water tank 51.

The cold water input side joint 34b and the cold water output side joint 34c are connected to the cold water line L2 at the time of hydrogen adsorption, and detached from the cold water line L2 at the time of hydrogen discharge.

When adsorbing the hydrogen generated by the hydrogen generation device 2, the cold water flows through the cold water path 33a, so that the tank 31 in contact with the temperature control block 33 is directly cooled. Furthermore, the tank 31 is indirectly cooled through the jacket 32 by cooling the temperature control block 33. Note that the temperature of the cold water is set so that the tank 31 at the time of hydrogen adsorption becomes a predetermined temperature (e.g., 15°C) .

The heater power supply joint 34d is connected to the heater power supply 6 through a power supply cable 61, and is connected to the cartridge heater 33b through a cable (not illustrated). The heater power supply joint 34d is detached from the heater power supply 6 at the time of hydrogen adsorption, and is connected to the heater power supply 6 at the time of hydrogen discharge.

When the cartridge heater 33b is activated, the temperature control block 33 is warmed, and the tank 31 in contact with the temperature control block 33 is directly warmed. Furthermore, the tank 31 is indirectly warmed through the jacket 32. The heating temperature of the cartridge heater 33b is set so that the temperature of the tank 31 when the MH unit 3 discharges hydrogen becomes a predetermined temperature (e.g., 30°C). Note that the heating of the temperature control block 33 is not limited to the heating by the cartridge heater 33b, and for example, may be a configuration of flowing warm water to the cold water path 33a, and the like. Auxiliary accessories such as piping and pump for flowing warm water, and the like become unnecessary, and the tank 31 can be efficiently warmed as compared with warm water, and the like by using the cartridge heater 33b for the heating of the tank 31.

In this manner, when the MH unit 3 performs cooling or heating of the tank 31 while being insulated from the outside by the heat insulating materials 35a, 35b, the hydrogen can be efficiently absorbed and discharged without being subjected to the influence of external environment (e.g., when the outside air temperature is significantly high compared to the cooling temperature or when the outside air temperature is significantly low compared to the heating temperature, etc.).

In addition, the MH unit 3 is preferably provided with a temperature sensor (not illustrated) for monitoring the temperature of the tank 31. Thus, for example, the temperature of the tank 31 can be maintained at approximately 30°C by performing the heating by the cartridge heater 33b when the temperature of the tank 31 is lower than or equal to 29°C, and stopping the heating by the cartridge heater 33b when the temperature of the tank 31 reaches 30°C.

Thus, the hydrogen power generation system 1 according to the present embodiment can appropriately detach the connection between the MH unit 3 and the hydrogen generation device 2 or the fuel cell 4,and can efficiently perform storage of hydrogen and generation of power using hydrogen.

The present invention can be variously modified within a scope not deviating from the spirit of the present invention, and it should be recognized that the present invention encompasses all such modifications.

### INDUSTRIAL APPLICABILITY

### DESCRIPTION OF SYMBOLS

- 1: hydrogen power generation system
- 2: hydrogen generation device
- 21: water electrolysis stack
- 22: pure water purification device
- 23: solar cell(renewable energy power generation device)
- 24: secondary cell
- 3: MH unit (cartridge type hydrogen storage device)
- 31: tank
- 32: jacket
- 33: temperature control block
- 33a: cold water path
- 33b: cartridge heater
- 34: casing
- 34a: hydrogen joint
- 34b: cold water input side joint
- 34c: cold water output side joint
- 34d: heater power supply joint
- 35a, 35b: heat insulating material
- 4: fuel cell
- 42: exhaust heat recycling mechanism
- 5: cooling device
- 51: cold water tank
- 52: chiller
- 53: pump
- 6: heater power supply
- 61: power supply cable
- L1: storage hydrogen line
- L2: cold water line
- L3: discharge hydrogen line

## Claims

1. A hydrogen power generation system comprising:
a hydrogen generation device that generates hydrogen by reacting water;
a power generation device that generates power using the hydrogen; and
a cartridge type hydrogen storage device that is detachably connected to the hydrogen generation device or the power generation device, stores hydrogen generated by the hydrogen generation device, and is capable of supplying hydrogen to the power generation device.

2. The hydrogen power generation system according to claim 1, wherein the cartridge type hydrogen storage device includes,
a tank that stores the hydrogen,
a jacket made of metal in contact with the tank, and
a casing that accommodates the jacket.

3. The hydrogen power generation system according to claim 2, wherein the jacket is formed to a substantially cylindrical shape so as to come into contact with an outer periphery and a bottom surface of the tank.

4. The hydrogen power generation system according to claim 2 or 3, wherein the cartridge type hydrogen storage device further includes a temperature control block that is joined to the jacket to temperature control the jacket.

5. The hydrogen power generation system according to claim 4, further comprising a cooling device that cools the jacket by supplying cold water to a cold water path formed in the temperature control block.

6. The hydrogen power generation system according to claim 4 or 5, wherein the cartridge type hydrogen storage device further includes a heater that is buried in the temperature control block to heat the jacket.

7. The hydrogen power generation system according to any one of claims 2 to 6, wherein a hydrogen absorbing alloy is accommodated in the tank.

8. The hydrogen power generation system according to any one of claims 1 to 7, wherein the hydrogen generation device is a water electrolysis stack that generates hydrogen through electrolysis of water.

9. The hydrogen power generation system according to any one of claims 1 to 8, wherein the hydrogen generation device further includes,
a renewable energy power generation device, and
a secondary cell that accumulates electricity generated by the renewable energy power generation device.

10. The hydrogen power generation system according to any one of claims 1 to 9, wherein
the power generation device is a fuel cell, and
an exhaust heat recycling mechanism that warms outside air taken into the fuel cell by exhaust heat of the fuel cell is further provided.

11. The hydrogen power generation system according to claim 10, wherein
a housing accommodating the fuel cell is communicated to a return duct through an exhaust side opening provided on an exhaust side with respect to the fuel cell in a flowing direction of air flowing through the housing and an intake side opening provided on an intake side with respect to the fuel cell; and
the exhaust heat recycling mechanism includes,
a temperature sensor that measures a temperature of outside air taken into the fuel cell,
a shutter that can open/close the exhaust side opening for allowing or blocking the inflow of air from the housing to the return duct through the exhaust side opening,
a fan that sends the air in the return duct to the housing through the intake side opening, and
a controller that opens the shutter and drives the fan to return the air warmed by the exhaust heat of the fuel cell to the outside air when a temperature of the outside air is lower than or equal to a predetermined temperature.
